# EUROPEAN PATENT APPLICATION

(11) **EP 4 722 258 A1**
(43) Date of publication of application: **08.04.2026**
(21) Application number: 24811236.9
(22) Date of filing: 25.03.2024
(51) Int. Cl.: C08F 4/646, C08F 4/654, C08F 4/649, C08F 4/642, C08F 10/00

(54) **ZIEGLER-NATTA CATALYST FOR OLEFIN POLYMERIZATION AND METHOD FOR PREPARING POLYOLEFIN**

(30) Priority: 24.05.2023 KR 20230067260
(71) Applicant: Hanwha Solutions Corporation, Seoul 04541 (KR)
(72) Inventor: WOO, Hyun Je, Seoul 04541 (KR); JOUNG, Ui Gab, Seoul 04541 (KR); KU, Il Hwae, Seoul 04541 (KR); KWON, Yea Rang, Seoul 04541 (KR)
(74) Representative: Berggren Oy
(86) International application number: PCT/KR2024/003683
(87) International publication number: WO 2024/242297

(57) **Abstract**

Disclosed are a Ziegler-Natta catalyst for olefin polymerization and a method for preparing a polyolefin with good processability using the same, wherein the Ziegler-Natta catalyst for olefin polymerization includes at least one external electron donor satisfying a specific formula based on an alkoxysilane (silicate) as a parent to increase the number of active sites of a titanium compound, thereby enabling preparation of a polyolefin with good processability.

## Description

### [Technical Field]

The present invention relates to a Ziegler-Natta catalyst for olefin polymerization and a method for preparing a polyolefin with good processability using the same.

### [Background Art]

Polyolefins are a class of polymer derived from simple olefins. A polyolefin preparation method known in the art is carried out using a Ziegler-Natta catalyst for polymerization. The catalyst provides a polymer with a highly isotactic stereochemical arrangement through polymerization of a vinyl monomer using a transition metal halide.

In particular, as polyethylene, a kind of polyolefin, has been used for various applications in recent years, there is a need for a catalyst and method for preparing a polyethylene resin with good processability to improve productivity of the polyethylene resin.

(Patent Reference 1) KR 10-2423660 B

### [Disclosure]

### [Technical Problem]

The present invention is aimed at providing a Zegler-Natta catalyst for olefin polymerization including at least one external electron donor satisfying a specific formula; a method for preparing a polyolefin using the catalyst; and a polyolefin with high processability prepared thereby.

### [Technical Solution]

In accordance with one aspect of the present invention, a Zegler-Natta catalyst for olefin polymerization includes: a Zegler-Natta pro-catalyst for olefin polymerization including a titanium compound represented by Formula 1, a magnesium compound represented by Formula 2, and an internal electron donor represented by Formula 3; an organoaluminum compound represented by Formula 4; and an external electron donor represented by Formula 5.

[Formula 1] TiXₙ(OR¹)₄₋ₙ

(In Formula 1,
R¹ is one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
n is an integer of 0 to 4; and
a substituent in "substituted or unsubstituted" is independently at least one selected from the group consisting of a halogen group, a cyano group, a nitro group, and a C₁ to C₈ alkyl group.)

[Formula 2] Mg(OR²)ₖX₂₋ₖ

(In Formula 2,
R² is one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
k is an integer of 0 to 2; and
a substituent in "substituted or unsubstituted" is independently at least one selected from the group consisting of a halogen group, a cyano group, a nitro group, and a C₁ to C₈ alkyl group.)

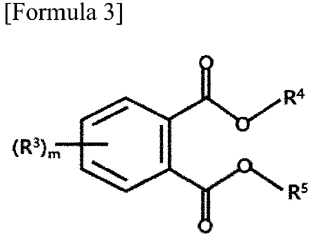

(In Formula 3,
R³ is one selected from the group consisting of a hydrogen atom, a halogen atom, a substituted or unsubstituted C₁ to C₂₀ alkyl group, a substituted or unsubstituted C₃ to C₂₀ cycloalkyl group, and a substituted or unsubstituted C₃ to C₂₀ aryl group;
R⁴ and R⁵ are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
m is an integer of 0 to 4; and
a substituent in "substituted or unsubstituted" is independently at least one selected from the group consisting of a halogen group, a cyano group, a nitro group, and a C₁ to C₈ alkyl group.)

[Formula 4] Al(R⁶)ₚX₃₋ₚ

(In Formula 4,
R⁶ is one selected from the group consisting of a hydrogen atom, a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
p is an integer of 0 to 3; and
a substituent in "substituted or unsubstituted" is independently at least one selected from the group consisting of a halogen group, a cyano group, a nitro group, and a C₁ to C₈ alkyl group.)

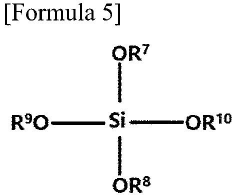

(In Formula 5,
R⁷, R⁸, R⁹, and R¹⁰ are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group; and
a substituent in "substituted or unsubstituted" is independently at least one selected from the group consisting of a halogen group, a cyano group, a nitro group, and a C₁ to C₈ alkyl group.)

The internal electron donor may include at least one selected from the group consisting of diisobutyl phthalate, diethyl phthalate, di-n-butyl phthalate, di-n-octyl phthalate, and diisooctyl phthalate.

The external electron donor may include at least one selected from the group consisting of compounds represented by Formula 5-1 and Formula 5-2.

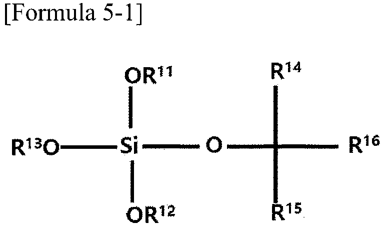

(In Formula 5-1,
R¹¹, R¹², and R¹³ are independently a substituted or unsubstituted C₁ to C₂ alkyl group;
R¹⁴ and R¹⁵ are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
R¹⁶ is one selected from the group consisting of a hydrogen atom, a halogen group, a substituted or unsubstituted C₁ to C₂₀ alkyl group, a substituted or unsubstituted C₃ to C₂₀ cycloalkyl group, and a substituted or unsubstituted C₃ to C₂₀ aryl group; and
a substituent in "substituted or unsubstituted" is independently at least one selected from the group consisting of a halogen group, a cyano group, a nitro group, and a C1 to C₈ alkyl group.)

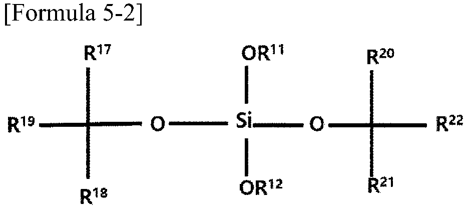

(In Formula 5-2,
R¹¹ and R¹² are independently a substituted or unsubstituted C₁ to C₂ alkyl group;
R¹⁷, R¹⁸, and R²⁰ to R²² are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
R¹⁹ is one selected from the group consisting of a hydrogen atom, a halogen group, a substituted or unsubstituted C₁ to C₂₀ alkyl group, a substituted or unsubstituted C₃ to C₂₀ cycloalkyl group, and a substituted or unsubstituted C₃ to C₂₀ aryl group; and
a substituent in "substituted or unsubstituted" is independently at least one selected from the group consisting of a halogen group, a cyano group, a nitro group, and a C1 to C₈ alkyl group.)

The external electron donor may include at least one selected from the group consisting of compounds represented by Formula 5-1a, Formula 5-1b, Formula 5-1c, Formula 5-1d, Formula 5-2a, and Formula 5-2b.

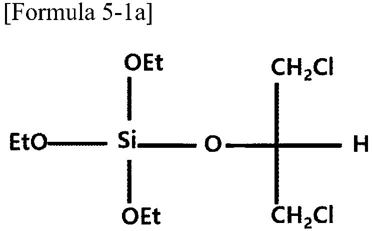

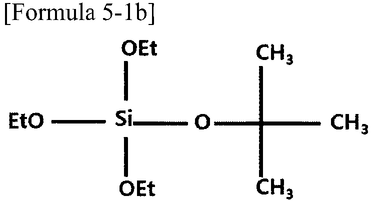

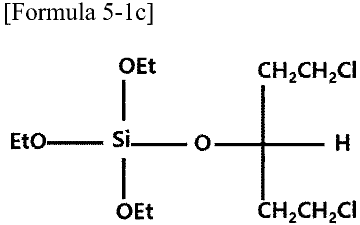

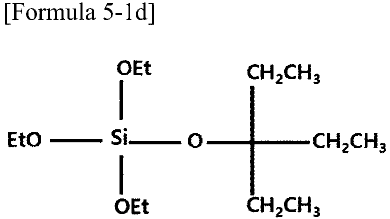

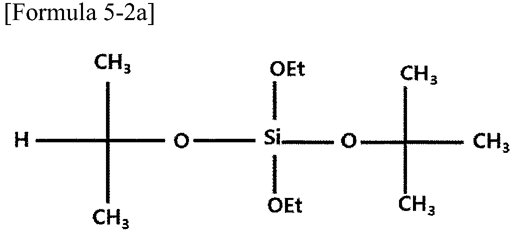

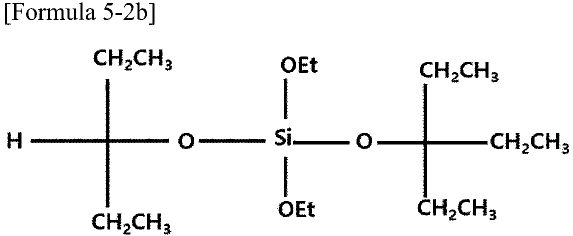

In other embodiments, the external electron donor may include two compounds selected from the compounds represented by Formula 5-1a, Formula 5-1b, Formula 5-1c, Formula 5-1d, Formula 5-2a, and Formula 5-2b.

A mole ratio of the titanium compound to the external electron donor in the Zegler-Natta pro-catalyst for olefin polymerization may be about 1:3 to 9. In some embodiments, the mole ratio of the titanium compound to the external electron donor in the Zegler-Natta pro-catalyst for olefin polymerization may be about 1:3.1 to 8.8, for example, about 1:3.5, about 1:4, about 1:4.5, about 1:5, about 1:5.5, about 1:6. 1:6.5, about 1:7, about 1:7.5, about 1:8, or about 1:8.5.

In accordance with another aspect of the present invention, a method for preparing a polyolefin includes: polymerizing an olefin represented by Formula 6 in the presence of a Ziegler-Natta catalyst for olefin polymerization including an external electron donor represented by Formula 5.

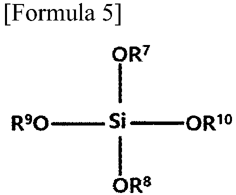

(In Formula 5,
R⁷, R⁸, R⁹, and R¹⁰ are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group; and
a substituent in "substituted or unsubstituted" is independently at least one selected from the group consisting of a halogen group, a cyano group, a nitro group, and a C₁ to C₈ alkyl group.)

[Formula 6] CH₂=CHR²³

(In Formula 6,

R²³ is a hydrogen atom or a C₁ to C₆ alkyl or aryl group.)

The external electron donor may include at least one selected from the group consisting of compounds represented by Formula 5-1 and Formula 5-2.

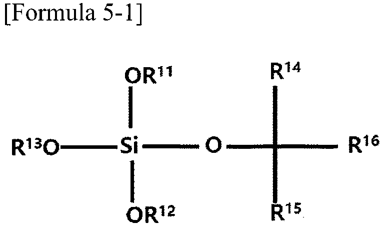

(In Formula 5-1,
R¹¹, R¹², and R¹³ are independently a substituted or unsubstituted C₁ to C₂ alkyl group;
R¹⁴ and R¹⁵ are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
R¹⁶ is one selected from the group consisting of a hydrogen atom, a halogen group, a substituted or unsubstituted C₁ to C₂₀ alkyl group, a substituted or unsubstituted C₃ to C₂₀ cycloalkyl group, and a substituted or unsubstituted C₃ to C₂₀ aryl group; and
a substituent in "substituted or unsubstituted" is independently at least one selected from the group consisting of a halogen group, a cyano group, a nitro group, and a C₁ to C₈ alkyl group.)

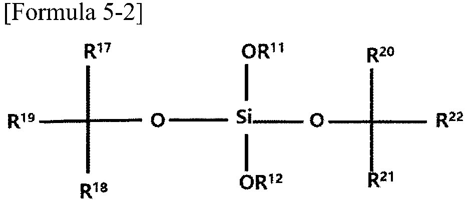

(In Formula 5-2,
R¹¹ and R¹² are independently a substituted or unsubstituted C₁ to C₂ alkyl group;
R¹⁷, R¹⁸, and R²⁰ to R²² are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
R¹⁹ is one selected from the group consisting of a hydrogen atom, a halogen group, a substituted or unsubstituted C₁ to C₂₀ alkyl group, a substituted or unsubstituted C₃ to C₂₀ cycloalkyl group, and a substituted or unsubstituted C₃ to C₂₀aryl group; and
a substituent in "substituted or unsubstituted" is independently at least one selected from the group consisting of a halogen group, a cyano group, a nitro group, and a C1 to C₈ alkyl group.)

The external electron donor may include at least one selected from the group consisting of compounds represented by Formula 5-1a, Formula 5-1b, Formula 5-1c, Formula 5-1d, Formula 5-2a, and Formula 5-2b.

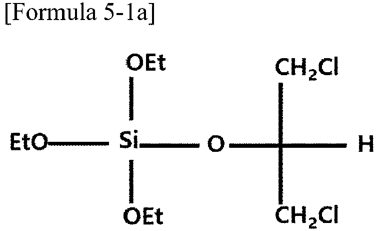

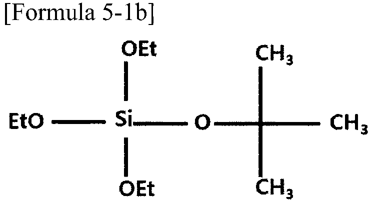

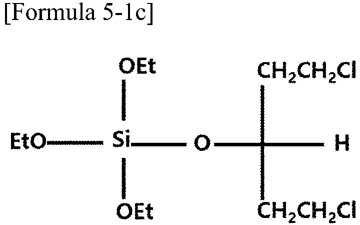

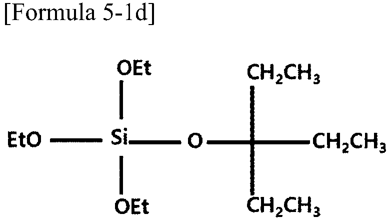

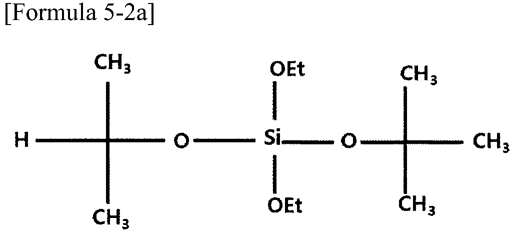

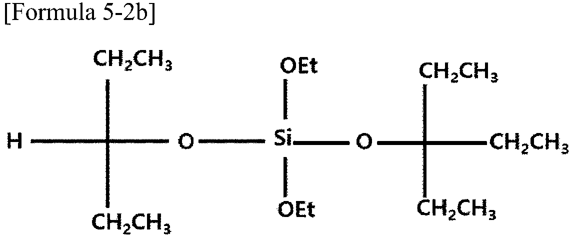

In other embodiments, the external electron donor may include two compounds selected from the compounds represented by Formula 5-1a, Formula 5-1b, Formula 5-1c, Formula 5-1d, Formula 5-2a, and Formula 5-2b.

A mole ratio of the titanium compound to the external electron donor in the Ziegler-Natta pro-catalyst for olefin polymerization may be about 1:3 to 9. In some embodiments, the mole ratio of the titanium compound to the external electron donor in the Ziegler-Natta pro-catalyst for olefin polymerization may be about 1:3.1 to 8.8, for example, about 1:3.5, about 1:4, about 1:4.5, about 1:5, about 1:5.5, about 1:6, about 1:6.5, about 1:7, about 1:7.5, about 1:8, or about 1:8.5.

The polymerization may be carried out at a temperature of about 80° C to about 90° C for about 0.5 hours to about 1.5 hours while supplying the olefin at a pressure of about 6 bar to about 8 bar.

In accordance with yet another aspect of the present invention, a polyethylene resin is prepared by the polyolefin preparation method according to the present invention and has an MFR ratio (MFR_{21.6}/MFR_{2.16}) of about 33.0 to about 44.0. In some embodiments, the polyethylene resin may have an MFR ratio (MFR_{21.6}/MFR_{2.16}) of about 33.1 to about 43.2, for example, 33.8, 36.5, 39.2, or 40.2.

### [Advantageous Effects]

A Ziegler-Natta catalyst for olefin polymerization includes at least one external electron donor satisfying a specific formula based on an alkoxysilane (silicate) as a parent to increase the number of active sites of a titanium compound, thereby enabling preparation of a polyolefin with good processability.

### [Best Mode ]

These and other objects, features, and advantages will become apparent from the following embodiments described with reference to the accompanying drawings. However, the present invention is not limited to the embodiments described herein and may be embodied in other forms. Rather, the following embodiments are given by way of illustration to provide a thorough and complete understanding of the present invention such that technical ideas can be fully conveyed to those skilled in the art.

Throughout the specification, like elements are denoted by like reference numerals. In the figures, dimensions of various elements may be exaggerated for clarity of illustration. It will be understood that, although the terms first, second, and the like may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments. Throughout the specification, unless specified otherwise, each element may be singular or plural.

As used herein, it should be understood that the terms "comprise", "include", "have", and the like are intended to specify the presence of stated features, numbers, steps, operations, components, parts, or combinations thereof, and are not intended to preclude the presence or addition of one or more other features, numbers, steps, operations, components, parts, or combinations thereof.

Herein, unless stated otherwise, all numbers, values and/or expressions used herein to express amounts of components, reaction conditions, polymer compositions and formulations should be understood to be qualified in all cases by the term "about", since such numbers are inherently approximate values reflecting, among other things, various uncertainties in measurement encountered in obtaining such values. Further, when a numerical range is disclosed herein, such a range is continuous and includes all values from the minimum value of the range up to and including the maximum value of the range, unless indicated otherwise. Furthermore, where such a range refers to integers, the range includes all integers from the minimum value of the range up to and including the maximum value of the range, unless indicated otherwise.

Herein, when a certain range is described for a variable, the variable will be understood to include all values within the stated range including the described endpoints of the stated range. For example, the range of "5 to 10" will be understood to include not only values, such as 5, 6, 7, 8, 9, and 10, but also any subrange thereof, such as 6 to 10, 7 to 10, 6 to 9, 7 to 9, and any value between integers that fall within the stated range, such as 5.5, 6.5, 7.5, 5.5 to 8.5, and 6.5 to 9. In addition, for example, the range of "10% to 30%" will be understood to include not only values, such as 10%, 11%, 12%, 13%, and all integers up to and including 30%, but also arbitrary subranges thereof, such as 10% to 15%, 12% to 18%, 20% to 30%, and arbitrary values between any of integers within the stated range, such as 10.5%, 15.5%, 25.5%, and the like.

In recent years, as polyethylene has been used for various applications, there is a need for a catalyst for preparation of a polyethylene resin with good processability and a method for preparing the same in order to improve productivity of the polyethylene resin.

In order to solve this problem, the present inventors have found that a Zegler-Natta catalyst for olefin polymerization, which includes at least one external electron donor satisfying a specific formula based on an alkoxysilane (silicate) as a parent to increase the number of active sites of a titanium compound, thereby enabling preparation of polyolefin with good processability.

Herein, unless stated otherwise, "C₁ to Cₙ alkyl group" means a primary alkyl group, a secondary alkyl group (n≥3), and a tertiary alkyl group (n≥4) having 1 to n carbon atoms. For example, the C₁ to Cₙ alkyl group may be a functional group, such as methyl, ethyl, *n-propyl, i-propyl, n-butyl, i-butyl, tert-butyl, n-hexyl,* and the like.

Herein, unless stated otherwise, an aryl group means a chemical group obtained by removal of one hydrogen atom from a C₂ to C₃₀ monocyclic or polycyclic compound including at least one benzene ring, and derivatives thereof, in which the monocyclic or polycyclic compound including at least one benzene ring may include, for example, toluene, xylene, and the like, wherein an alky side chain is joined to the benzene ring; biphenyl and the like, wherein two or more benzene rings are joined to each other through a single bond; fluorene, xanthene, anthraquinone, and the like, wherein the benzene ring is condensed with a cycloalkyl group or a heterocycloalkyl group; naphthalene, anthracene, and the like, wherein two or more benzene rings are condensed, and the like.

Herein, unless stated otherwise, the prefix "hetero" means that a carbon atom is substituted with one to three heteroatoms selected from the group consisting of -N-, -O-, -S-, and -P-. For example, the heteroatom may include a pyridine, pyrrole, or carbazole containing a nitrogen atom, a furan or dibenzofuran containing an oxygen atom, dibenzothiophene or diphenylamine, and the like.

Herein, unless stated otherwise, a halogen group refers to a group XVII element, for example, a fluoro group, a chloro group, a bromo group, or an iodo group.

In accordance with one aspect of the present invention, a Zegler-Natta catalyst for olefin polymerization includes: a Zegler-Natta pro-catalyst for olefin polymerization including a titanium compound represented by Formula 1, a magnesium compound represented by Formula 2, and an internal electron donor represented by Formula 3; an organoaluminum compound represented by Formula 4; and an external electron donor represented by Formula 5.

[Formula 1] TiXₙ(OR¹)₄₋ₙ

In Formula 1,
R¹ may be one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
X may be a halogen atom;
n may be an integer of 0 to 4; and
a substituent in "substituted or unsubstituted" may be independently at least one selected from the group consisting of a halogen group, a cyano group, a nitro group, and a C₁ to C₈ alkyl group.

[Formula 2] Mg(OR²)ₖX₂₋ₖ

In Formula 2,
R² may be one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
X may be a halogen atom;
k may be an integer of 0 to 2; and
a substituent in "substituted or unsubstituted" may be independently at least one selected from the group consisting of a halogen group, a cyano group, a nitro group, and a C₁ to C₈ alkyl group.

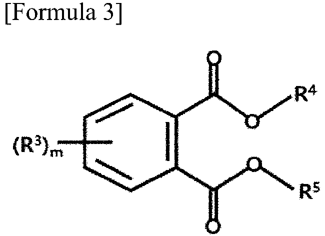

In Formula 3,
R³ may be one selected from the group consisting of a hydrogen atom, a halogen atom, a substituted or unsubstituted C₁ to C₂₀ alkyl group, a substituted or unsubstituted C₃ to C₂₀ cycloalkyl group, and a substituted or unsubstituted C₃ to C₂₀ aryl group;
R⁴ and R⁵ may be independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
m may be an integer of 0 to 4; and
a substituent in "substituted or unsubstituted" may be independently at least one selected from the group consisting of a halogen group, a cyano group, a nitro group, and a C₁ to C₈ alkyl group.

[Formula 4] Al(R⁶)ₚX₃₋ₚ

In Formula 4,
R⁶ may be one selected from the group consisting of a hydrogen atom, a substituted or unsubstituted C₁ to C₂₀ alkyl group, a substituted or unsubstituted C₃ to C₂₀ cycloalkyl group, and a substituted or unsubstituted C₃ to C₂₀ aryl group;
X may be a halogen atom;
p may be an integer of 0 to 3; and
a substituent in "substituted or unsubstituted" may be independently at least one selected from the group consisting of a halogen group, a cyano group, a nitro group, and a C₁ to C₈ alkyl group.

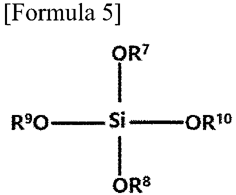

In Formula 5,
R⁷, R⁸, R⁹, and R¹⁰ may be independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group; and
a substituent in "substituted or unsubstituted" may be independently at least one selected from the group consisting of a halogen group, a cyano group, a nitro group, and a C₁ to C₈ alkyl group.

According to one embodiment, the Zegler-Natta pro-catalyst for olefin polymerization is a catalyst component that includes a titanium compound having active sites, a magnesium compound as a catalyst support, and an internal electron donor binding to the catalyst support to activate the active sites of the titanium compound, and may be present in powder form. According to one embodiment, the Zegler-Natta catalyst for olefin polymerization may include a pro-catalyst in powder form, an organoaluminum compound as a co-catalyst, and a titanium compound further including an external electron donor that further activates the active sites of the titanium compound.

According to one embodiment, the titanium compound is an active center metal, that is, a metal having an active site, through which substantial polymerization reaction can be carried out. According to one embodiment, the titanium compound may include at least one selected from the group consisting of tetravalent titanium halides and titanium alkoxides, preferably titanium tetrachloride (TiCl₄), titanium trichloride (TiCl₃), and the like.

According to one embodiment, the magnesium compound is a catalyst support capable of modulating properties, such as activity and steric regularity of the active center metal having an active site, such as a titanium compound, through subsequent coupling with an electron donor depending on the molecular structure and binding strength. According to one embodiment, the magnesium compound may include magnesium dialkoxide, magnesium diaryloxide, or magnesium chloride (MgCl₂), preferably magnesium dialkoxide, which has high purity to reduce impurities in a finally synthesized catalyst and is soluble in a solvent during catalyst synthesis.

According to one embodiment, the internal electron donor is capable of modulating properties, such as activity and steric regularity of the titanium compound, through binding to the magnesium compound acting as a catalyst support. According to one embodiment, the internal electron donor may include at least one selected from the group consisting of diisobutyl phthalate, diethyl phthalate, di-n-butyl phthalate, di-n-octyl phthalate, and diisooctyl phthalate, preferably diisobutyl phthalate that binds to the catalyst support competitively with the catalytic active sites, TiCl₄, and helps to ensure that the TiCl₄ active sites are uniformly contained without aggregation.

According to one embodiment, the organoaluminum compound may act as a co-catalyst to activate the TiCl₄ active sites. According to one embodiment, the organoaluminum compound may include at least one selected from the group consisting of trimethylaluminum, triethylaluminum, triisobutylaluminum, trioctylaluminum, diethylaluminum hydride, diisobutylaluminum hydride, diethylaluminum chloride, diisobutylaluminum chloride, sesquiethylaluminum chloride, and ethylaluminum dichloride, preferably triethylaluminum that can increase polymerization activity and facilitate control of the molecular weight of a polymerized resin.

According to one embodiment, the external electron donor serves to bind to a site, from which the inner electron donor has been removed by a co-catalyst, triethyl aluminum, to maintain catalytic activity and stability and may include at least one selected from the group consisting of compounds represented by Formula 5-1 and Formula 5-2.

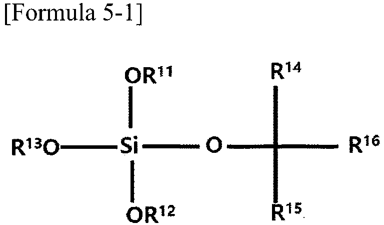

In Formula 5-1,
R¹¹, R¹², and R¹³ may be independently a substituted or unsubstituted C₁ to C₂ alkyl group;
R¹⁴ and R¹⁵ may be independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
R¹⁶ is one selected from the group consisting of a hydrogen atom, a halogen group, a substituted or unsubstituted C₁ to C₂₀ alkyl group, a substituted or unsubstituted C₃ to C₂₀ cycloalkyl group, and a substituted or unsubstituted C₃ to C₂₀ aryl group; and
a substituent in "substituted or unsubstituted" may be independently at least one selected from the group consisting of a halogen group, a cyano group, a nitro group, and a C₁ to C₈ alkyl group.

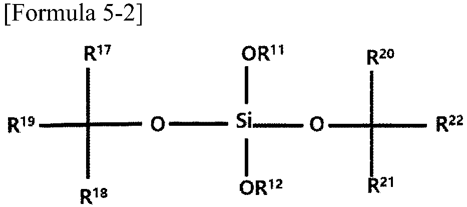

In Formula 5-2,
R¹¹ and R¹² may be independently a substituted or unsubstituted C₁ to C₂ alkyl group;
R¹⁷, R¹⁸, and R²⁰ to R²² may be independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
R¹⁹ may be one selected from the group consisting of a hydrogen atom, a halogen group, a substituted or unsubstituted C₁ to C₂₀ alkyl group, a substituted or unsubstituted C₃ to C₂₀ cycloalkyl group, and a substituted or unsubstituted C₃ to C₂₀ aryl group; and
a substituent in "substituted or unsubstituted" may be independently at least one selected from the group consisting of a halogen group, a cyano group, a nitro group, and a C₁ to C₈ alkyl group.

According to one embodiment, the external electron donor may include at least one selected from the group consisting of compounds represented by Formulas 5-1a to 5-1d and Formulas 5-2a to 5-2b.

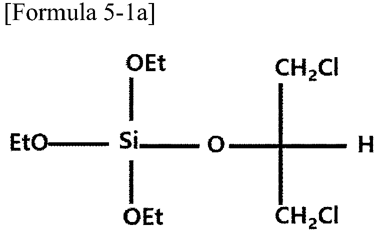

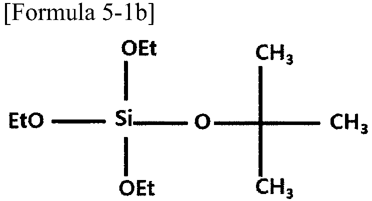

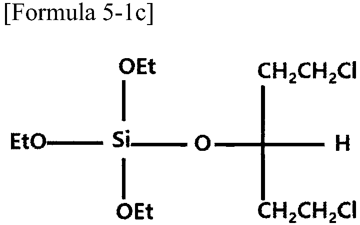

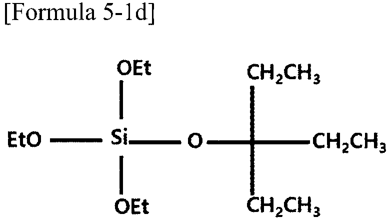

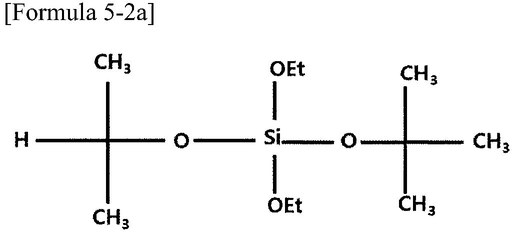

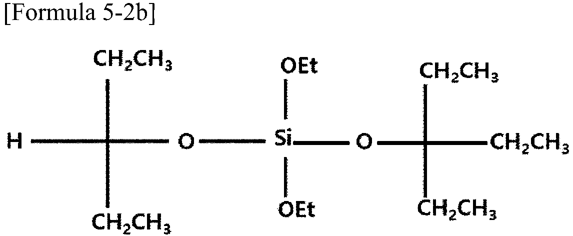

That is, Formula 5-1a may be triethoxy-(1,3-dichloroisopropoxy)-silane, Formula 5-1b may be triethoxy-(t-butoxy)-silane, Formula 5-1c may be triethoxy-[3-chloro-1-(2-chloroethyl)propoxy]silane, Formula 5-1d may be triethoxy-(1,1-diethylpropoxy)-silane, Formula 5-2a may be diethoxyisopropoxy-(t-butoxy)-silane, and Formula 5-2b may be diethoxy-(1-ethylpropoxy)-(1,1-diethylpropoxy)-silane.

That is, the external electron donor in the Ziegler-Natta catalyst for olefin polymerization according to the present invention has a specific structure, such as the compounds represented by Formulas 5-1a to 5-1d, and Formulas 5-2a to 5-2b, in which, as the number of functional groups with different structures included in one external electron donor increases, the number of active sites of the titanium compound increases through increase in binding modes of the external electron donor to the crystal planes of magnesium chloride, thereby improving processability of a polyolefin prepared through olefin polymerization.

According to one embodiment, the external electron donor may include any one of the compounds represented by Formulas 5-1a to 5-1d and Formulas 5-2a to 5-2b, or may include two compounds selected from the group consisting of compounds represented by Formulas 5-1a to 5-1d and Formulas 5-2a to 5-2b. Preferably, the external electron donor includes two compounds to secure a high MFR ratio (MFR_{21.6}/MFR_{2.16}) of 39 or more. For example, when including two compounds, the external electron donor may include the compound represented by Formula 5-1a and any one of the compounds represented by Formulas 5-1b to 5-1d and Formulas 5-2a to 5-2b; the compound represented by Formula 5-1b and any one of the compounds represented by Formulas 5-1c to 5-1d and Formulas 5-2a and 5-2b; the compound represented by Formula 5-1c and any one of the compounds represented by Formula 5-1d and Formulas 5-2a and 5-2b; the compound represented by Formula 5-1d and any one of the compounds represented by Formula 5-2a and Formula 5-2b; or the compound represented by Formula 5-2a and the compound represented by Formula 5-2b.

According to one embodiment, when including two compounds, the external electron donor may include a first compound and a second compound selected from the compounds represented by Formula 5-1a Formula 5-1b, Formula 5-1c, Formula 5-1d, Formula 5-2a, and Formula 5-2b, wherein a mole ratio of the first compound to the second compound may be about 1:0.8 to 1.2. Here, the first compound and the second compound may be different from each other. For example, the first compound may be the compound represented by Formula 5-1a and the second compound may be any one of the compounds represented by Formulas 5-1b to 5-1d and Formulas 5-2a to 5-2b. Here, the mole ratio of the first compound to the second compound may be about 1:0.8 to 1.2. In some embodiments, the mole ratio of the first compound to the second compound may be, for example, 1:0.9, 1:1, 1:1.1, or 1:1.1.

With this mole ratio, the external electron donor can stabilize the catalytic active sites and can prevent poisoning of the catalytic active sites.

According to one embodiment, the external electron donor may be present in an amount of about 40 wt% to about 60 wt%, based on 100 wt% of the Ziegler-Natta catalyst for total olefin polymerization. Within this range, the external electron donor can secure good stability of the catalytic active sites and can prevent poisoning of the catalytic active sites.

That is, in the Zegler-Natta catalyst for olefin polymerization, the external electron donor has a specific structure, such as the compounds represented by Formulas 5-1a to 5-1d and Formulas 5-2a to 5-2b, based on an alkoxysilane (silicate) as a parent, in which, as the number of functional groups with different structures included in one external electron donor increases, the number of active sites of the titanium compound increases through increase in binding modes of the external electron donor to the crystal planes of magnesium chloride, thereby improving processability of a polyolefin prepared through olefin polymerization.

In accordance with a further aspect of the present invention, a method for preparing a Zegler-Natta pro-catalyst for olefin polymerization includes: a first stirring step in which a titanium compound represented by Formula 1 is mixed with a magnesium compound represented by Formula 2, followed by stirring; a second stirring step in which an internal electron donor represented by Formula 3 is added to a first stirring product obtained by the first stirring step, followed by stirring; and vacuum drying a second stirring product obtained by the second stirring step. In the following description relating to the method for preparing the Ziegler-Natta pro-catalyst for olefin polymerization, redundant description of the Ziegler-Natta catalyst for olefin polymerization will be omitted.

According to one embodiment, the first stirring step includes adding the titanium compound and the magnesium compound to an organic solvent, followed by stirring while raising temperature from room temperature to a first temperature at a rate of about 0.5°C/min to about 1.5°C/min

According to one embodiment, the organic solvent may include toluene, ether, acetone, alcohol, and the like, preferably toluene.

According to one embodiment, the first temperature may range from about 70°C to about 90°C, preferably from 75°C to 85°C. Outside this first temperature range, too low a first temperature has a problem in that the internal electron donor is insoluble in the solvent, and too high a first temperature causes side reactions of the internal electron donor.

According to one embodiment, the second stirring step includes adding the internal electron donor to the first stirring product, raising the temperature to a second temperature, and stirring the first stirring product for about 1.8 hours to about 2.2 hours.

According to one embodiment, the second temperature may range from about 100°C to about 120°C, preferably from 105°C to 115°C. Outside this second temperature range, too low a second temperature has a problem in that TiCl₄ is not supported on the catalyst support and too high a second temperature causes evaporation of the solvent.

According to one embodiment, the method may further include a third stirring step after the second stirring. Specifically, the method includes removing the organic solvent and the titanium compound, adding fresh organic solvent and titanium compound, and raising the temperature from room temperature to a third temperature, followed by stirring for about 1.8 hours to about 2.2 hours. After stirring, the method may further include washing a resulting product of the third stirring with an organic solvent or the like.

According to one embodiment, the third temperature may range from about 100°C to about 120°C, preferably from 105°C to 115°C.

According to one embodiment, the step of vacuum drying includes drying the second stirring product or the third stirring product under vacuum to obtain a Ziegler-Natta pro-catalyst for olefin polymerization in powder form. The method may further include washing the second stirring product or the third stirring product with an organic solvent or the like before vacuum drying the second stirring product or the third stirring product.

In accordance with yet another aspect of the present invention, a method for preparing a Ziegler-Natta catalyst for olefin polymerization includes adding a Ziegler-Natta pro-catalyst for olefin polymerization, an organoaluminum compound represented by Formula 4, and an external electron donor represented by Formula 5 to an organic solvent, followed by stirring. In the following description relating to the method for preparing the Zegler-Natta pro-catalyst for olefin polymerization, redundant description of the Zegler-Natta catalyst for olefin polymerization will be omitted.

According to one embodiment, the organic solvent may include hexane, toluene, ether, acetone, alcohol, and the like, preferably hexane.

According to one embodiment, stirring may be performed at about 280 rpm to about 320 rpm, preferably about 290 rpm to about 310 rpm. In some embodiments, stirring may be performed at about 285 rpm to about 315 rpm, for example, about 290 rpm, about 295 rpm, about 300 rpm, about 305 rpm, or about 310 rpm.

According to one embodiment, the titanium compound and the external electron donor may be present in a mole ratio of about 1:3 to 9, preferably in a mole ratio of 1:4 to 8, in the Zegler-Natta pro-catalyst for olefin polymerization. In one embodiment, the mole ratio of the titanium compound to the external electron donor may be about 1:3.1 to 8.8, for example, about 1:3.5, about 1:4, about 1:4.5, about 1:5, about 1:5.5, about 1:6, about 1:6.5, about 1:7, about 1:7.5, about 1:8, or about 1:8.5, in the Zegler-Natta pro-catalyst for olefin polymerization.

Within this mole ratio range, the titanium compound and the external electron donor can secure good stability of the catalytic active sites and can prevent deterioration in activity due to poisoning of the catalytic active sites.

In accordance with yet another aspect of the present invention, a method for preparing a polyolefin includes polymerizing an olefin represented by Formula 6 in the presence of a Zegler-Natta catalyst for olefin polymerization, preferably in the presence of a Zegler-Natta catalyst for olefin polymerization comprising an external electron donor represented by Formula 5.

[Formula 6] CH₂=CHR²³

In Formula 6, R²³ may be a hydrogen atom or a C₁ to C₆ alkyl or aryl group.

According to one embodiment, the method for preparing a polyolefin may be a method for preparing polyethylene. Accordingly, the method for preparing a polyolefin may include polymerizing an olefin, preferably an ethylene monomer, in the presence of the Zegler-Natta catalyst for olefin polymerization.

According to one embodiment, in the method for preparing a polyolefin, polymerization may be carried out under conditions of a pressure of about 6 bar to 8 bar and a temperature of about 80°C to 90°C in a hydrogen gas atmosphere. In polymerization, too low a temperature makes it difficult to achieve polymerization due to decrease in catalytic activity, and too high a temperature causes rapid decrease in catalytic activity due to overreaction of the catalyst.

According to one embodiment, polymerization may be carried out for about 0.5 hours to about 1.5 hours, preferably for about 0.8 hours to about 1.2 hours.

According to another aspect, a polyolefin, preferably polyethylene, prepared by the method for preparing a polyolefin using the Zegler-Natta catalyst for olefin polymerization may have an MFR ratio (MFR_{21.6}/MFR_{2.16}) of about 33.0 to about 44.0.

According to one embodiment, the polyolefin, preferably polyethylene, prepared by the method for preparing a polyolefin using the Zegler-Natta catalyst for olefin polymerization may have an MFR_{21.6} of about 29.0 g/10 min to about 48.0 g/10 min at a temperature of 190°C under a load of 21.6 kg, an MFR_{2.16} of about 0.5 g/10 min to 1.5 g/10 min at a temperature of 190°C under a load of 2.16 kg, and an MFR ratio (MFR_{21.6}/MFR_{2.16}) of about 33.0 to about 44.0. In some embodiments, the MFR ratio (MFR21.6/MFR2.16) may be from about 33.1 to about 43.2, for example, 33.8, 36.5, 39.2, or 40.2. That is, in the polyolefin prepared by the method for preparing a polyolefin using the Zegler-Natta catalyst for olefin polymerization, the external electron donor in the catalyst has a specific structure, in which, as the number of functional groups with different structures included in one external electron donor increases, the number of active sites of the titanium compound increases through increase in binding modes of the external electron donor to the crystal planes of magnesium chloride and a higher MFR ratio is obtained, thereby improving productivity of a polyolefin resin with good processability.

Next, the present invention will be described in more detail with reference to some examples. It should be understood that these examples are provided for illustration only and are not to be construed in any way as limiting the invention.

### Example 1: Preparation of polyethylene using Zegler-Natta catalyst for olefin polymerization

### Preparative Example 1: Preparation of Zegler-Natta pro-catalyst for olefin polymerization

4 g of a magnesium compound Mg(OC₂H₅)₂ (magnesium ethoxide) carrier and 8 ml of a titanium compound (TiCl₄) were added to 12 ml of toluene, an organic solvent, followed by first stirring at 300 RPM while raising temperature from room temperature to 80°C at a rate of 1°C/min. Then, when the reaction temperature reached 80°C, an internal electron donor, diisobutyl phthalate (Catalyst A) (4.5 mmol), was added to the first stirring product and warmed up to 110°C at a rate of 1°C /min, followed by second stirring for 2 hours. Then, with the TiCl₄ and toluene solution removed, fresh TiCl₄ (10 ml) and toluene (30 ml) were added to the second stirring product, which in turn was warmed from room temperature to 110°C at a rate of 1°C/min and was subjected to third stirring for 2 hours. Then, a resulting carrier catalyst obtained by third stirring was washed with 100 ml toluene twice and with 100 ml hexane twice, and dried under vacuum, thereby preparing a Zegler-Natta pro-catalyst (carrier catalyst) for olefin polymerization in powder form.

### Preparative Example 2: Preparation of Zegler-Natta catalyst for olefin polymerization and polyethylene

A 2-liter high-pressure reactor was dried in an oven and assembled in a hot state, and was placed under a nitrogen atmosphere by alternating nitrogen and vacuum three times. Then, 1,000 ml of hexane, an organic solvent, was added to the reactor, followed by adding 15 mg of the Ziegler-Natta pro-catalyst for ethylene polymerization (Preparative Example 1), 0.24 ml of an external electron donor [triethoxy-(1,3-dichloroisopropoxy)-silane; ED1; Formula 5-1a] (diluted in hexane at a 1/20 volume ratio), and 2 mmol of triethylaluminum, an organoaluminum compound (co-catalyst). Then, a Zegler-Natta catalyst for olefin polymerization was prepared while stirring at 300 rpm. With the temperature of the reactor raised to 85°C, hydrogen was injected once at 3 bar, followed by carrying out polyethylene polymerization for 1 hour while continuously adding ethylene at a constant pressure of 7 bar. Then, the temperature of the reactor was lowered to room temperature and the resulting polymer was collected and dried, thereby preparing a white polyethylene polymer in powder form.

### Example 2: Preparation of polyethylene with different external electron donor

A polyethylene polymer was prepared in the same manner as in Example 1 except that triethoxy-(t-butoxy)-silane (ED2; Formula 5-1b) was used as an external electron donor in Preparative Example 2.

### Example 3: Preparation of polyethylene with different external electron donor

A polyethylene polymer was prepared in the same manner as in Example 1 except that diethoxyisopropoxy-(t-butoxy)-silane (ED3; Formula 5-2a) was used as an external electron donor in Preparative Example 2.

### Example 4: Preparation of polyethylene by combining external electron donors

A polyethylene polymer was prepared in the same manner as in Example 1 except that a mixture of triethoxy-(t-butoxy)-silane (ED2; Formula 5-1b) and diethoxyisopropoxy-(t-butoxy)-silane (ED3; Formula 5-2a) in a mole ratio of 1:1 was used as an external electron donor in Preparative Example 2.

### Example 5: Preparation of polyethylene by combining external electron donors

A polyethylene polymer was prepared in the same manner as in Example 1 except that a mixture of diethoxyisopropoxy-(t-butoxy)-silane (ED3; Formula 5-2a) and triethoxy-[3chloro-1-(2-chloroethyl)propoxy]silane (ED4; Formula 5-1c) in a mole ratio of 1:1 was used as an external electron donor in Preparative Example 2.

### Example 6: Preparation of polyethylene by combining external electron donors

A polyethylene polymer was prepared in the same manner as in Example 1 except that a mixture of diethoxyisopropoxy-(t-butoxy)-silane (ED3; Formula 5-2a) and diethoxy-(1-ethylpropoxy)-(1,1-diethylpropoxy)-silane (ED5; Formula 5-2b) in a mole ratio of 1:1 was used as an external electron donor in Preparative Example 2.

### Comparative Example 1: Preparation of polyethylene with different external electron donor

A polyethylene polymer was prepared in the same manner as in Example 1 except that cyclohexylmethyldimethoxysilane (C-donor) (ED6) was used as an external electron donor in Preparative Example 2.

### Comparative Example 2: Preparation of polyethylene with different internal and external electron donors

A polyethylene polymer was prepared in the same manner as in Example 1 except that a commercial Ziegler-Natta catalyst Z-213 (Catalyst B, manufactured by LyondellBasell) was used as an internal electron donor in Preparative Example 1 and cyclohexylmethyldimethoxysilane (C-donor) (ED6) was as an external electron donor in Preparative Example 2.

### Evaluation of polyethylene property

- Measurement of activity (g_{PE}/g_{cat}): Weight of resin obtained (g)/weight of catalyst (g)
- Measurement of MFR_{2.16} (g/10min) and MFR_{21.6} (g/10min): MFR_{2.16} and MFR_{21.6} were measured under a load of 2.16 kg (MI_{2.16}) and a load of 21.6 kg (MI_{21.6}) at 190°C in accordance with ASTM D 1238, respectively.
- Melt flow ratio (MFR): Melt indexes MFR_{21.6} and MFR_{2.16} were measured to obtain an MFR ratio (= MFR_{21.6}/MFR_{2.16}).
- Measurement of density (g/cm³): Density was measured in accordance with ASTM D1505.

### Property Evaluation of polyethylene

**Table 1**

| Kind | Internal electron donor | External electron donor | Mole ratio of Ti compound to external electron donor | MFR ratio (MFR_{21.6}/ MRF_{2.16}) | MFR_{2.16} (g/10 min) | MFR_{21.6} (g/10 min) | Activity (g_{PE}/g_{cat}) | Density (g/cm³) |
|---|---|---|---|---|---|---|---|---|
| Example 1 | Catalyst A | ED1 | 1:5 | 33.8 | 1.2 | 40.6 | 5,867 | 0.957 |
| Example 2 | Catalyst A | ED2 | 1:5 | 33.1 | 0.9 | 29.8 | 6,633 | 0.961 |
| Example 3 | Catalyst A | ED3 | 1:5 | 36.5 | 0.9 | 32.9 | 6,267 | 0.953 |
| Example 4 | Catalyst A | ED2 + ED3 (1:1) | 1:5 | 39.5 | 1.1 | 43.5 | 4,542 | 0.956 |
| Example 5 | Catalyst A | ED3 + ED4 (1:1) | 1:5 | 40.2 | 1.0 | 40.2 | 4,751 | 0.954 |
| Example 6 | Catalyst A | ED3 + ED5 (1:1) | 1:5 | 43.2 | 1.1 | 47.5 | 4,567 | 0.953 |
| Comparative Example 1 | Catalyst A | ED6 | 1:5 | 27.8 | 1.0 | 27.8 | 5,261 | 0.957 |
| Comparative Example 2 | Catalyst B | ED6 | 1:5 | 24.6 | 1.1 | 27.1 | 5,136 | 0.956 |

Referring to Table 1, it could be seen that, although other properties were similar, the polyethylene prepared in Examples 1 to 3 using a catalyst including an external electron donor having a specific structure had a higher MFR ratio (MFR_{21.6}/MFR_{2.16}) of 33.1 to 36.5 than the polyethylene prepared in Comparative Examples 1 and 2, since increase in the number of functional groups with different structures included in one external electron donor increases the number of active sites of the titanium compound through increase in binding modes of the external electron donor to the crystal planes of magnesium chloride. It could also be seen that the polyethylene prepared in Examples 4 to 6 included two or more external electron donors, which further increase the number of active sites of the titanium compound through further increase in binding modes of the external electron donors to the crystal planes of magnesium chloride, and thus had a higher MFR ratio (MFR_{21.6}/MFR_{2.16}).

That is, polyethylene prepared by the method for preparing polyethylene using the Zegler-Natta catalyst for olefin polymerization has good processability due to a high MFR ratio, thereby securing improvement in productivity of a polyethylene resin.

It should be understood that various modifications, changes, alterations, and equivalent embodiments may be made by those skilled in the art without departing from the spirit and scope of the invention.

### [Industrial Availability]

A Ziegler-Natta catalyst for olefin polymerization includes at least one external electron donor satisfying a specific formula based on an alkoxysilane (silicate) as a parent to increase the number of active sites of a titanium compound, thereby enabling preparation of polyolefin with good processability.

## Claims

1. A Ziegler-Natta catalyst for olefin polymerization, comprising:
a Zegler-Natta pro-catalyst for olefin polymerization comprising a titanium compound represented by Formula 1, a magnesium compound represented by Formula 2, and an internal electron donor represented by Formula 3;
an organoaluminum compound represented by Formula 4; and
an external electron donor represented by Formula 5.
[Formula 1] TiXₙ(OR¹)₄₋ₙ
(In Formula 1,
R¹ is one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
n is an integer of 0 to 4; and
a substituent in "substituted or unsubstituted" is independently at least one selected from the group consisting of a halogen group, a cyano group, a nitro group, and a C₁ to C₈ alkyl group.)
[Formula 2] Mg(OR²)ₖX₂₋ₖ
(In Formula 2,
R² is one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
k is an integer of 0 to 2; and
a substituent in "substituted or unsubstituted" is independently at least one selected from the group consisting of a halogen group, a cyano group, a nitro group, and a C₁ to C₈ alkyl group.) 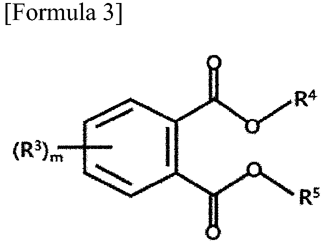
(In Formula 3,
R³ is one selected from the group consisting of a hydrogen atom, a halogen atom, a substituted or unsubstituted C₁ to C₂₀ alkyl group, a substituted or unsubstituted C₃ to C₂₀ cycloalkyl group, and a substituted or unsubstituted C₃ to C₂₀ aryl group;
R⁴ and R⁵ are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
m is an integer of 0 to 4; and
a substituent in "substituted or unsubstituted" is independently at least one selected from the group consisting of a halogen group, a cyano group, a nitro group, and a C₁ to C₈ alkyl group.)
[Formula 4] Al(R⁶)ₚX₃₋ₚ
(In Formula 4,
R⁶ is one selected from the group consisting of a hydrogen atom, a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
p is an integer of 0 to 3; and
a substituent in "substituted or unsubstituted" is independently at least one selected from the group consisting of a halogen group, a cyano group, a nitro group, and a C₁ to C₈ alkyl group.) 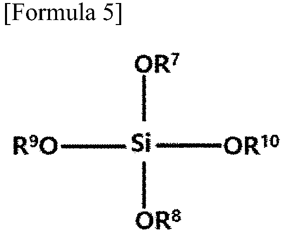
(In Formula 5,
R⁷, R⁸, R⁹, and R¹⁰ are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group; and
a substituent in "substituted or unsubstituted" is independently at least one selected from the group consisting of a halogen group, a cyano group, a nitro group, and a C₁ to C₈ alkyl group.)

2. The Ziegler-Natta catalyst for olefin polymerization according to claim 1, wherein the internal electron donor comprises at least one selected from the group consisting of diisobutyl phthalate, diethyl phthalate, di-n-butyl phthalate, di-n-octyl phthalate, and diisooctyl phthalate.

3. The Ziegler-Natta catalyst for olefin polymerization according to claim 1, wherein the external electron donor comprises at least one selected from the group consisting of compounds represented by Formula 5-1 and Formula 5-2. 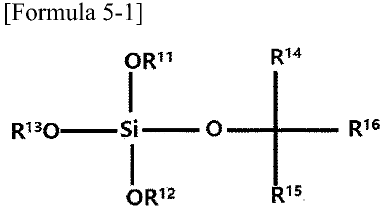 (In Formula 5-1,
R¹¹, R¹², and R¹³ are independently a substituted or unsubstituted C₁ to C₂ alkyl group;
R¹⁴ and R¹⁵ are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
R¹⁶ is one selected from the group consisting of a hydrogen atom, a halogen group, a substituted or unsubstituted C₁ to C₂₀ alkyl group, a substituted or unsubstituted C₃ to C₂₀ cycloalkyl group, and a substituted or unsubstituted C₃ to C₂₀ aryl group; and
a substituent in "substituted or unsubstituted" is independently at least one selected from the group consisting of a halogen group, a cyano group, a nitro group, and a C₁ to C₈ alkyl group.) 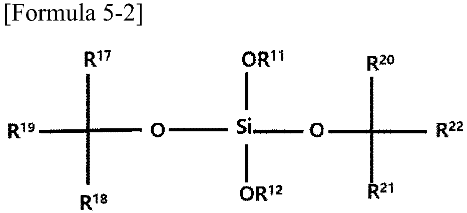
(In Formula 5-2,
R¹¹ and R¹² are independently a substituted or unsubstituted C₁ to C₂ alkyl group;
R¹⁷, R¹⁸, and R²⁰ to R²² are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
R¹⁹ is one selected from the group consisting of a hydrogen atom, a halogen group, a substituted or unsubstituted C₁ to C₂₀ alkyl group, a substituted or unsubstituted C₃ to C₂₀ cycloalkyl group, and a substituted or unsubstituted C₃ to C₂₀ aryl group; and
a substituent in "substituted or unsubstituted" is independently at least one selected from the group consisting of a halogen group, a cyano group, a nitro group, and a C₁ to C₈ alkyl group.)

4. The Ziegler-Natta catalyst for olefin polymerization according to claim 1, wherein the external electron donor comprises at least one selected from the group consisting of compounds represented by Formula 5-1a, Formula 5-1b, Formula 5-1c, Formula 5-1d, Formula 5-2a, and Formula 5-2b.

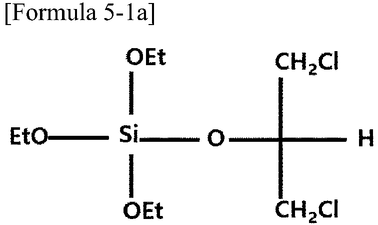

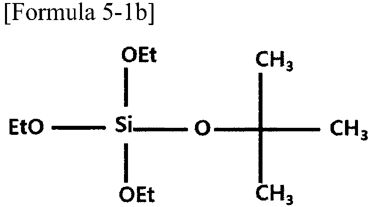

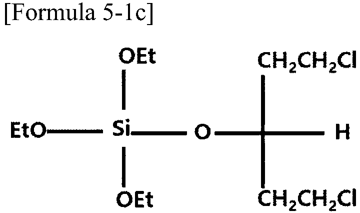

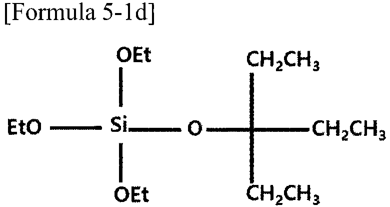

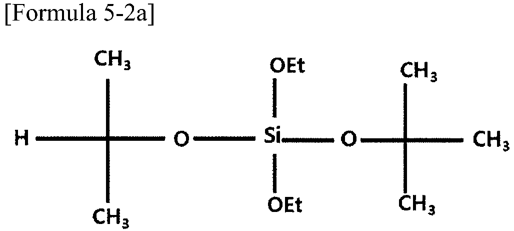

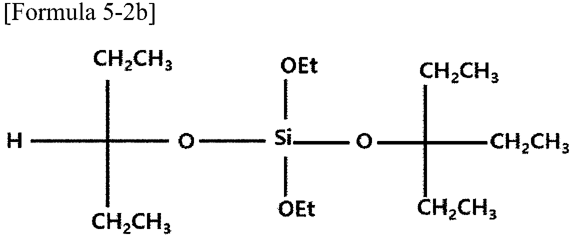

5. The Ziegler-Natta catalyst for olefin polymerization according to claim 4, wherein the external electron donor comprise two compounds selected from the compounds represented by Formula 5-1a, Formula 5-1b, Formula 5-1c, Formula 5-1d, Formula 5-2a, and Formula 5-2b.

6. The Ziegler-Natta catalyst for olefin polymerization according to claim 1, wherein a mole ratio of the titanium compound to the external electron donor in the Zegler-Natta pro-catalyst for olefin polymerization is 1:3 to 9.

7. A method for preparing a polyolefin, comprising:
polymerizing an olefin represented by Formula 6 in the presence of a Ziegler-Natta catalyst for olefin polymerization comprising a pro-catalyst comprising an inner electron donor represented by Formula 3; and an external electron donor represented by Formula 5. 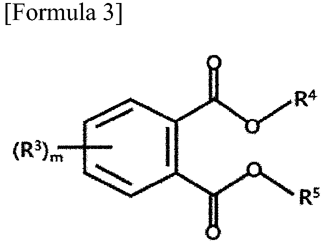
(In Formula 3,
R³ is one selected from the group consisting of a hydrogen atom, a halogen atom, a substituted or unsubstituted C₁ to C₂₀ alkyl group, a substituted or unsubstituted C₃ to C₂₀ cycloalkyl group, and a substituted or unsubstituted C₃ to C₂₀ aryl group;
R⁴ and R⁵ are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
m is an integer of 0 to 4; and
a substituent in "substituted or unsubstituted" is independently at least one selected from the group consisting of a halogen group, a cyano group, a nitro group, and a C₁ to C₈ alkyl group.) 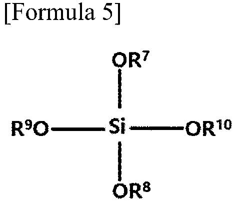
(In Formula 5,
R⁷, R⁸, R⁹, and R¹⁰ are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group; and
a substituent in "substituted or unsubstituted" is independently at least one selected from the group consisting of a halogen group, a cyano group, a nitro group, and a C₁ to C₈ alkyl group.)
[Formula 6] CH₂=CHR²³
(In Formula 6, R²³ is a hydrogen atom or a C₁ to C₆ alkyl or aryl group.)

8. The method for preparing a polyolefin according to claim 7, wherein the external electron donor comprises at least one selected from the group consisting of compounds represented by Formula 5-1 and Formula 5-2. 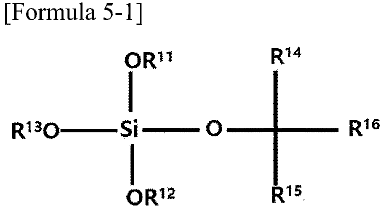 (In Formula 5-1,
R¹¹, R¹², and R¹³ are independently a substituted or unsubstituted C₁ to C₂ alkyl group;
R¹⁴ and R¹⁵ are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
R¹⁶ is one selected from the group consisting of a hydrogen atom, a halogen group, a substituted or unsubstituted C₁ to C₂₀ alkyl group, a substituted or unsubstituted C₃ to C₂₀ cycloalkyl group, and a substituted or unsubstituted C₃ to C₂₀aryl group; and
a substituent in "substituted or unsubstituted" is independently at least one selected from the group consisting of a halogen group, a cyano group, a nitro group, and a C₁ to C₈ alkyl group.) 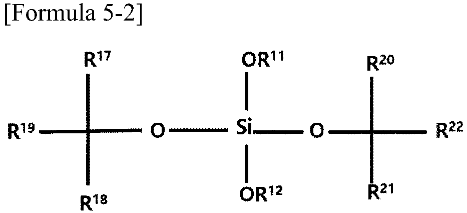
(In Formula 5-2,
R¹¹ and R¹² are independently a substituted or unsubstituted C₁ to C₂ alkyl group;
R¹⁷, R¹⁸, and R²⁰ to R²² are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
R¹⁹ is one selected from the group consisting of a hydrogen atom, a halogen group, a substituted or unsubstituted C₁ to C₂₀ alkyl group, a substituted or unsubstituted C₃ to C₂₀ cycloalkyl group, and a substituted or unsubstituted C₃ to C₂₀aryl group; and
a substituent in "substituted or unsubstituted" is independently at least one selected from the group consisting of a halogen group, a cyano group, a nitro group, and a C1 to C₈ alkyl group.)

9. The method for preparing a polyolefin according to claim 7, wherein the external electron donor comprises at least one selected from the group consisting of compounds represented by Formula 5-1a, Formula 5-1b, Formula 5-1c, Formula 5-1d, Formula 5-2a, and Formula 5-2b.

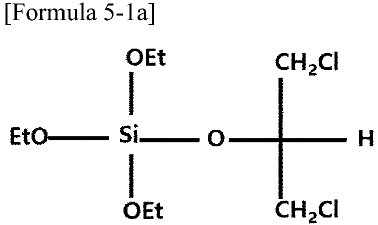

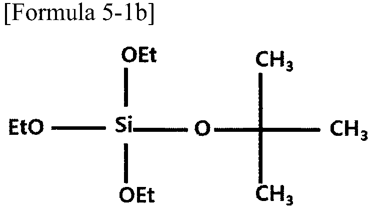

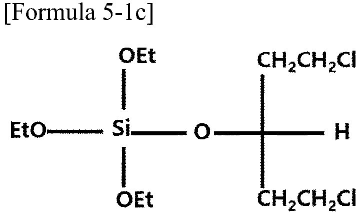

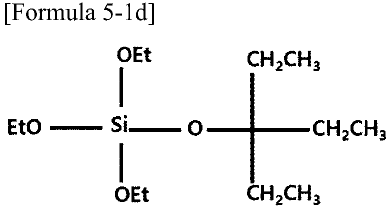

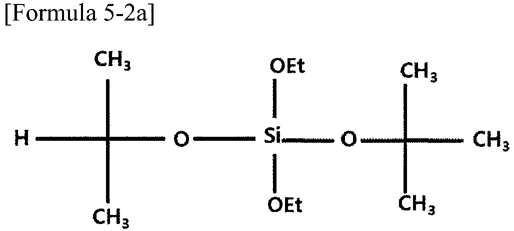

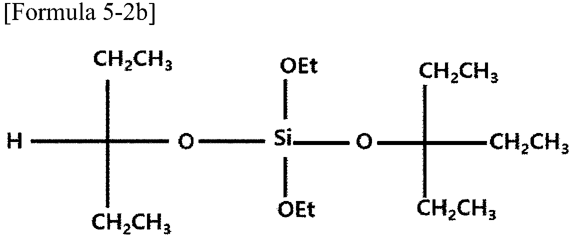

10. The method for preparing a polyolefin according to claim 9, wherein the external electron donor comprises two compounds selected from the compounds represented by Formula 5-1a, Formula 5-1b, Formula 5-1c, Formula 5-1d, Formula 5-2a, and Formula 5-2b.

11. The method for preparing a polyolefin according to claim 7, wherein a mole ratio of the titanium compound to the external electron donor in the Ziegler-Natta pro-catalyst for olefin polymerization is 1:3 to 9.

12. The method for preparing a polyolefin according to claim 7, wherein the polymerization is carried out at a temperature of 80° C to 90° C for 0.5 hours to 1.5 hours while supplying the olefin at a pressure of 6 bar to 8 bar.

13. A polyethylene resin prepared by the method according to claim 7, having an MFR ratio (MFR_{21.6}/MFR_{2.16}) of 33.0 to 44.0.
